(19) Europäisches Patentamt
European Patent Office
Office européen des brevets

(11) **EP 4 675 705 A1**

(12) **EUROPEAN PATENT APPLICATION**
published in accordance with Art. 153(4) EPC

(43) Date of publication:
**07.01.2026 Bulletin 2026/02**

(21) Application number: **23924846.1**

(22) Date of filing: **29.06.2023**

(51) International Patent Classification (IPC):
***H01M 4/505*** *(2010.01)* ***H01M 4/525*** *(2010.01)*
***H01M 4/485*** *(2010.01)* ***H01M 10/05*** *(2010.01)*
***H01M 4/131*** *(2010.01)*

(52) Cooperative Patent Classification (CPC):
**H01M 4/131; H01M 4/136; H01M 4/36; H01M 4/485; H01M 4/505; H01M 4/525; H01M 4/58; H01M 10/05; H01M 10/054;**
Y02E 60/10

(86) International application number:
**PCT/CN2023/103684**

(87) International publication number:
**WO 2024/178885 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.03.2023 CN 202310192349**

(71) Applicant: **Institute of Physics, Chinese Academy of Sciences**
**Beijing 100190 (CN)**

(72) Inventors:
- **HU, Yongsheng**
  **Beijing 100190 (CN)**
- **YANG, Yang**
  **Beijing 100190 (CN)**
- **WANG, Xubin**
  **Beijing 100190 (CN)**
- **WANG, Bowen**
  **Beijing 100190 (CN)**
- **RONG, Xiaohui**
  **Beijing 100190 (CN)**
- **LU, Yaxiang**
  **Beijing 100190 (CN)**
- **CHEN, Liquan**
  **Beijing 100190 (CN)**

(74) Representative: **Glück Kritzenberger Patentanwälte PartGmbB**
**Franz-Mayer-Str. 16a**
**93053 Regensburg (DE)**

(54) **METHOD FOR IMPROVING AIR STABILITY OF SODIUM ION LAYERED OXIDE, MATERIAL, AND USE**

(57) A method for improving air stability of a sodium ion layered oxide, a material, and a use. The method for improving air stability of a sodium ion layered oxide comprises: regulating the weighted average ionic potential $\Phi_M$ of cations other than sodium ions of a copper-based sodium ion layered oxide positive electrode material $Na_xCu_yM_zO_2$ and regulating a particle size r of primary particles of a crystal, so that 47.5 $nm^{-1} \leq \Phi_M \leq$ 50.5 $nm^{-1}$ and 1.4 $\mu m \leq r \leq 100$ $\mu m$,thereby reducing the amount of sodium loss of the sodium ion layered oxide positive electrode material after deterioration in air, and obtaining a sodium ion battery layered oxide positive electrode material having air stability, wherein M is selected from one or more of $Ni^{2+}$, $Zn^{2+}$, $Mg^{2+}$, $Fe^{3+}$, $La^{3+}$, $Lu^{3+}$, $Sb^{3+}$, $Mn^{4+}$, $Ti^{4+}$, $Zr^{4+}$, $Sn^{4+}$, and $Bi^{5+}$; and $0.9 \leq x \leq 1$, and y+z=1.

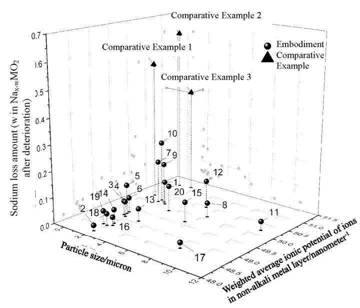


FIG. 9

EP 4 675 705 A1

Processed by Luminess, 75001 PARIS (FR)

## Description

CROSS-REFERENCE OF RELATED APPLICATION

The present application claims priority to Chinese Patent Application No. 202310192349.9, filed on March 02, 2023 and entitled "method for improving air stability of sodium ion layered oxide, material, and application".

BACKGROUND OF THE INVENTION

1. Technical Field

The present invention relates to the technical field of sodium ion batteries, and in particular to, a method for improving air stability of a sodium ion layered oxide, a material, and an application.

2. Description of Related Art

Due to limited and unevenly distributed lithium resource reserves, with the gradual consumption of the limited lithium resources and the increasing rise of price, the manufacturing cost of lithium ion batteries is increased greatly. However, sodium is extremely high in abundance on the earth, is widely distributed, and is low in cost. Therefore, sodium ion batteries will have the cost advantage and the resource safety advantage. In combination with unique advantages in high and low temperature performance and safety performance, the sodium ion batteries are a preferred option for large-scale energy storage, which has received much attention in recent years and has developed rapidly.

In a positive material of a sodium ion battery, by virtue of advantages such as high capacity, high tap density, easy preparation, easy large-scale production, and the like, a layered oxide $Na_xMO_2$ (M is mainly a transition metal) is expected to become the first choice for industrialization. However, a majority of layered oxide positive electrode materials of the sodium ion battery are unstable in air, and is prone to sodium loss in humid air. The sodium loss amount in humid air for 48 hours is greater than 30%. The reversible specific capacity of the deteriorated material is greatly attenuated. The alkaline byproducts on the surface of the deteriorated material will further bring a series of problems, such as coating agglomeration, internal resistance increase, and severe aerogenesis. In addition, the preservation condition of the material is harsher and an extra cost increase will be caused during production, transportation, and storage, which is contrary to the prospect of developing high-capacity, low-cost, and long-life sodium ion batteries. This weakness severely affects the process of large-scale industrialization of the layered oxide positive electrode material of the sodium ion battery, which is a severe challenge to the successful commercialization of the sodium ion battery.

BRIEF SUMMARY OF THE INVENTION

An objective of the present invention is to provide a method for improving air stability of a sodium ion layered oxide, a material, and an application. Thus, a layered oxide positive electrode material of the sodium ion battery based on this design principle can obtain good air stability and has an extremely large-scale production potential.

Therefore, in a first aspect, an embodiment of the present invention provides a method for improving air stability of a sodium ion layered oxide positive electrode material, including: regulating a weighted average ionic potential $\Phi_M$ of cations other than sodium ions of a copper-based sodium ion layered oxide positive electrode material $Na_xCu_yM_zO_2$ and regulating a particle size of primary particles of a crystal, so that $47.5\ nm^{-1} \leq \Phi_M \leq 50.5\ nm^{-1}$ and $1.4\ \mu m \leq r \leq 100\ \mu m$, thereby reducing the sodium loss amount of the sodium ion layered oxide positive electrode material after deterioration in air and obtaining a layered oxide positive electrode material of a sodium ion battery with air stability,

where M is selected from one or more of $Ni^{2+}$, $Zn^{2+}$, $Mg^{2+}$, $Fe^{3+}$, $La^{3+}$, $Lu^{3+}$, $Sb^{3+}$, $Mn^{4+}$, $Ti^{4+}$, $Zr^{4+}$, $Sn^{4+}$, and $Bi^{5+}$; and $0.9 \leq x \leq 1$, and $y+z=1$.

Preferably, the ionic potential is a ratio ($\Phi$) of an ionic charge number (Z) to an ionic radius (r, nanometer) of an ion, i.e., $\Phi=Z/r$, the weighted average ionic potential $\Phi_M$ is a weighted average of the ionic potentials of cations other than sodium ions with each cation weighted according to its molar fraction, i.e., $\Phi_M = \frac{\sum_i x_i \Phi_i}{\sum_i x_i} = \sum_i x_i \Phi_i = \sum_i x_i \frac{Z_i}{r_i}$, where $x_i$ is a percentage occupied by an ion i and satisfies that the sum of all $x_i$ is 1; $\Phi_i$ is the ionic potential of the ion i, $Z_i$ is a charge number of the ion i, and $r_i$ is the ionic radius of the ion i.

Preferably, the regulating a weighted average ionic potential $\Phi_M$ of cations other than sodium ions of a copper-based sodium ion layered oxide positive electrode material $Na_xCu_yM_zO_2$ and regulating a particle size of primary particles of a crystal specifically includes:

regulating the weighted average ionic potential $\Phi_M$ of cations other than sodium ions and the particle size of primary particles of the crystal by changing stoichiometric ratios y and z of Cu and M in $Na_xCu_yM_zO_2$.

Preferably, the method of regulating the particle size r of primary particles of the crystal further includes one or more of using excessive sodium carbonate, adding sodium hydroxide, sodium oxide, or sodium peroxide as a flux, increasing or decreasing a sintering temperature, and prolonging or shortening a sintering time.

In a second aspect, an embodiment of the present invention provides a layered oxide positive electrode material of a sodium ion battery with air stability obtained by the method according to the first aspect.

In a third aspect, an embodiment of the present invention provides a method for preparing the layered oxide positive electrode material of a sodium ion battery with air stability according to the second aspect, including:

mixing a sodium source with a chemometric ratio of 100-130% of sodium needed, and a Cu-containing precursor and an M-containing precursor with needed chemometric ratios in proportion, and sintering the mixture at a high temperature of 800-1200°C to generate the layered oxide positive electrode material of the sodium ion battery, where the sodium source includes one or more of sodium oxide, sodium peroxide, sodium hydroxide, sodium carbonate, and sodium nitrate;

the Cu-containing precursor includes one or more of a Cu-containing metal oxide, a Cu-containing metal carbonate, a Cu-containing metal nitrate, a Cu-containing metal oxalate, a Cu-containing metal acetate, a Cu-containing metal sulfate, and a Cu-containing metal hydroxide; and

the M-containing precursor includes one or more of an M-containing metal oxide, a M-containing metal carbonate, a M-containing metal nitrate, a M-containing metal oxalate, a M-containing metal acetate, a M-containing metal sulfate, and a M-containing metal hydroxide or a M-containing polymetallic hydroxide prepared by a co-precipitation method.

In a fourth aspect, an embodiment of the present invention includes a positive electrode of a sodium ion secondary battery, including the layered oxide positive electrode material of a sodium ion battery with air stability obtained by the method according to the second aspect.

Preferably, the positive electrode further includes a conductive additive and a binder, where

the conductive additive includes one or more of carbon black, acetylene black, a graphite powder, a carbon nanotube, graphene, and nitrogen-doped carbon; and

the binder includes one or more of polyvinylidene fluoride PVDF, sodium alginate, sodium carboxymethylcellulose CMC, and styrene-butadiene rubber SBR.

In a fifth aspect, an embodiment of the present invention i provides a sodium ion battery, including the layered oxide positive electrode material of a sodium ion battery with air stability according to the second aspect or the positive electrode according to the fourth aspect.

In a sixth aspect, an embodiment of the present invention provides an electrical device, including the sodium ion battery according to the fifth aspect.

The embodiment of the present invention provides the method for improving air stability of the sodium ion layered oxide positive electrode material. By regulating the weighted average ionic potential $\Phi_M$ in a relatively low value range, on the one hand, the electrochemical potential of the material can be improved, so that the material is prevented from being directly oxidized in air to cause sodium exfoliation; and on the other hand, the interaction between the sodium ions and lattice oxygen can be enhanced, so that the probability that the sodium ion exchanges with hydrogen ions generated to be exfoliated in the presence of water vapor and carbon dioxide is reduced. By adjusting the sintering temperature and introducing elements beneficial for crystal growth in the preparation method, the particle size of the material is in a relatively large range, so that the contact area between the material and the humid air can be effectively decreased, and the potential barrier at which the bulk phase sodium ions are exfoliated outward can be effectively increased, and therefore, the probability that the foregoing sodium ions are exfoliated is effectively reduced. Under a synthetic action, the layered oxide positive electrode material of the sodium ion battery based on this design principle is good in air stability and has an extremely large-scale production potential.

By this method, the sodium loss amount of the sodium ion layered oxide positive electrode material after deterioration in air can be effectively and greatly reduced, so that a layered oxide positive electrode material $Na_xCu_yM_zO_2$ of a sodium ion battery with air stability is obtained. The sodium loss amount of the layered oxide positive electrode material of the sodium ion battery with air stability based on the design principle is low after standard strict test of deterioration for 48 hours, so that the problem that the conventional layered oxide positive electrode material of the sodium ion battery is poor in air stability can be effectively solved, and the problems of coating agglomeration, internal resistance increase, severe aerogenesis, and high storage cost are further solved. The layered oxide positive electrode material of the sodium ion battery is suitable for large-scale production, is high in reversible specific capacity, and has broad application prospects, advantages, and higher practical value.

BRIEF DESCRIPTION OF THE SEVERAL VIEWS OF THE DRAWINGS

FIG. 1 is an X-ray diffraction (XRD) pattern of a material in Example 1 of the present inventioni;
FIG. 2 is an XRD pattern of a material in Comparative Example 1 of the present invention;
FIG. 3 is an XRD pattern of a material in Example 4 of the present invention;
FIG. 4 is a scanning electron microscope (SEM) image of a material in Example 8 of the present invention.
FIG. 5 is an SEM image of a material in Example 11 of the present invention.
FIG. 6 is an SEM image of a material in Example 12 of the present invention.
FIG. 7 is an SEM image of a material in Example 13 of the present invention.
FIG. 8 is an SEM image of a material in Comparative Example 1 of the present invention;
FIG. 9 is a relational graph between sodium loss amounts and weighted average cationic potentials and particle sizes of primary particles after materials are placed in a strict standard deterioration condition for 48 h in all Examples or Comparative Examples;
FIG. 10 is a comparison diagram of charging and discharging curves of half battery tests of materials before and after deterioration in Example 4;
FIG. 11 is a comparison diagram of charging and discharging curves of half battery tests of materials before and after deterioration in Example 7;
FIG. 12 is a comparison diagram of charging and discharging curves of half battery tests of materials before and after deterioration in Comparative Example 1; and
FIG. 13 is a comparison diagram of charging and discharging curves of half battery tests of materials before and after deterioration in Comparative Example 2.

DETAILED DESCRIPTION OF THE INVENTION

The technical solution of the present invention will be further described in detail with reference to drawings and embodiments.

An embodiment of the present invention provides a method for improving air stability of a sodium ion layered oxide positive electrode material, including: regulating a weighted average ionic potential $\Phi_M$ of cations other than sodium ions of a copper-based sodium ion layered oxide positive electrode material $Na_xCu_yM_zO_2$ and regulating a particle size of primary particles of a crystal, so that $47.5\ nm^{-1} \leq \Phi_M \leq 50.5\ nm^{-1}$ and $1.4\ \mu m \leq r \leq 100\ \mu m$, thereby reducing the sodium loss amount of the sodium ion layered oxide positive electrode material after deterioration in air and obtaining a layered oxide positive electrode material of a sodium ion battery with air stability,
where M is selected from one or more of $Ni^{2+}$, $Zn^{2+}$, $Mg^{2+}$, $Fe^{3+}$, $La^{3+}$, $Lu^{3+}$, $Sb^{3+}$, $Mn^{4+}$, $Ti^{4+}$, $Zr^{4+}$, $Sn^{4+}$, and $Bi^{5+}$; and $0.9 \leq x \leq 1$, and $y+z=1$.

We all know that the ionic potential refers to a ratio of an ionic charge number to an ionic radius, represented by $\Phi$. In the present application, the weighted average ionic potential $\Phi_M$ of cations other than sodium ions is a weighted average of the ionic potentials of cations other than Nag with each cations weighted according to itsmolar fraction , i.e.,

$$\Phi_M = \frac{\sum_i x_i \Phi_i}{\sum_i x_i} = \sum_i x_i \Phi_i = \sum_i x_i \frac{Z_i}{r_i}$$

, where $x_i$ is a percentage occupied by an ion i and satisfies that the sum of all $x_i$ is 1; $\Phi_i$ is the ionic potential of the ion i, $Z_i$ is a charge number of the ion i, and $r_i$ is the ionic radius of the ion i. The weighted average ionic potential $\Phi_M$ of cations other than sodium ions and the particle size of primary particles of the crystal are regulated by changing stoichiometric ratios y and z of Cu and M in $Na_xCu_yM_zO_2$, so that $47.5\ nm^{-1} \leq \Phi_M \leq 50.5\ nm^{-1}$ and $1.4\ \mu m \leq r \leq 100\ \mu m$ are satisfied. In addition, the method of regulating the particle size r of primary particles of the crystal may further include one or more of using excessive sodium carbonate, adding sodium hydroxide, sodium oxide, or sodium peroxide as a flux, increasing or decreasing a sintering temperature, and prolonging or shortening a sintering time. For example, using excessive sodium carbonate, adding sodium hydroxide, sodium oxide or sodium peroxide as a flux, increasing or decreasing a sintering temperature, and prolonging or shortening a sintering time all may increase the particle size r of the crystal particles. According to the present disclosure, by regulating the weighted average ionic potential $\Phi_M$, it is in a relatively low value range. Therefore, the metal M-doped material and adding proportion are limited. On the one hand, the exchange rate of sodium ions and hydrogen ions in the layered oxide positive electrode material in presence of water vapor and carbon dioxide can be effectively reduced, so that the electrochemical potential of the material can be improved, and the layered oxide positive electrode material is prevented from being directly oxidized to cause sodium loss. On the other hand, the interaction between sodium ions and lattice oxygen can be improved, the

probability that sodium ions are exfoliated due to exchange with generated hydrogen ions in presence of water vapor and carbon dioxide is reduced, and moreover, by adjusting the sintering temperature and introducing elements such as Cu or Zn etc., beneficial for crystal growth in the preparation method, the particle size of the material is in a relatively large range, so that the contact area between the material and the humid air can be effectively decreased, and the potential barrier at which the bulk phase sodium ions are exfoliated outward can be effectively increased, and the probability that the sodium ions are exfoliated is further effectively reduced, thereby playing a role of collaboratively reducing the sodium loss amount of the sodium ion layered oxide positive electrode material after deterioration in air to a great extent. The method can effectively solve the problem that the sodium ion layered oxide positive electrode material is unstable in air. The sodium loss amount of the layered oxide positive electrode material of the sodium ion battery with air stability based on the design principle is low after standard strict test of deterioration, and the sodium ion layered oxide positive electrode material has broad application prospects and advantages. The standard strict deterioration test used in the present invention is as follows: 1 g of the positive electrode material is placed in an environment whose relative humidity is constantly 60% and concentration of carbon dioxide is constantly 600 ppm for 48 hours.

Based on the above thought, the present invention provides a layered oxide positive electrode material of a sodium ion battery with air stability, which may be prepared by the following method:

mixing a sodium source with a chemometric ratio of 100-130% of sodium needed, and a Cu-containing precursor and an M-containing precursor with needed chemometric ratios in proportion, and sintering the mixture at a high temperature of 800-1200°C to generate the layered oxide positive electrode material of the sodium ion battery, where

the sodium source includes one or more of sodium oxide, sodium peroxide, sodium hydroxide, sodium carbonate, and sodium nitrate; the Cu-containing precursor includes one or more of a Cu-containing metal oxide, a Cu-containing metal carbonate, a Cu-containing metal nitrate, a Cu-containing metal oxalate, a Cu-containing metal acetate, a Cu-containing metal sulfate, and a Cu-containing metal hydroxide; and the M-containing precursor includes one or more of an M-containing metal oxide, a M-containing metal carbonate, a M-containing metal nitrate, a M-containing metal oxalate, a M-containing metal acetate, a M-containing metal sulfate, and a M-containing metal hydroxide or a M-containing polymetallic hydroxide prepared by a co-precipitation method.

The stoichiometric ratio of the sodium source is preferably the stoichiometric ratio of 100-110% of needed sodium.

The layered oxide positive electrode material of the sodium ion is used for a positive electrode and may further include: a conductive additive and a binder, where

the conductive additive includes one or more of carbon black, acetylene black, a graphite powder, a carbon nanotube, graphene, and nitrogen-doped carbon; and
the binder includes one or more of polyvinylidene fluoride (PVDF), sodium alginate, sodium carboxymethylcellulose (CMC), and styrene-butadiene rubber (SBR).

To better understand the technical solution of the present inventioni, specific examples are described below and compared with comparative examples. It should be understood that specific materials used in the examplary embodiment edisclosed below are merely specific implementations of the present invention and are not used to limit the protection scope of the present disclosure.

In embodimentse1-18, a metal ion M with a less ionic potential is selected first according to the following ionic potential table (octahedral coordination environment) to regulate the weighted average ionic potential $\Phi_M$ of other cations other than sodium ions, so that $\Phi_M$ satisfies 47.5 $nm^{-1} \leq \Phi_m \leq 50.5$ $nm^{-1}$, and then the layered oxide positive electrode materials with different grain sizes are obtained by adjusting the sintering means.

Table 1

| Element | Ionic charge number | Ionic radius (nanometer) | Ionic potential=ionic charge number/ionic radius (nanometer$^{-1}$) |
|---|---|---|---|
| Li | 1 | 0.0760 | 13.15789 |
| Na | 1 | 0.1020 | 9.80392 |
| Ca | 2 | 0.1000 | 20.00000 |
| Zn | 2 | 0.0740 | 27.02703 |
| Cu | 2 | 0.0730 | 27.39726 |

(continued)

| Element | Ionic charge number | Ionic radius (nanometer) | Ionic potential=ionic charge number/ionic radius (nanometer$^{-1}$) |
|---|---|---|---|
| Ni | 2 | 0.0690 | 28.98551 |
| La | 3 | 0.1032 | 29.06977 |
| Lu | 3 | 0.0861 | 34.84321 |
| Sb | 3 | 0.0760 | 39.47368 |
| Fe | 3 | 0.0645 | 46.51163 |
| Cr | 3 | 0.0615 | 48.78049 |
| Zr | 4 | 0.0720 | 55.55556 |
| Ti | 4 | 0.0605 | 66.11570 |
| Mn | 4 | 0.0530 | 75.47170 |
| Sn | 4 | 0.0830 | 48.19277 |
| Bi | 5 | 0.0900 | 55.55556 |

Embodiment 1

$\Phi_M$=50.076 nm$^{-1}$ is designed to prepare a $NaZn_{0.05}Cu_{0.05}Ni_{0.35}Fe_{0.1}Mn_{0.3}Ti_{0.15}O_2$ positive electrode material.

ZnO, CuO, NiO, $Fe_2O_3$, $MnO_2$, and $TiO_2$ were selected as a precursor, $Na_2CO_3$ and NaOH were selected as a sodium source; and the precursor and the sodium source at corresponding proportions were weighed, ball-milled for 6 hours, and sintered at 950°C for 15 hours to obtain a $NaZn_{0.05}Cu_{0.05}Ni_{0.35}Fe_{0.1}Mn_{0.3}Ti_{0.15}O_2$ positive electrode material, where a particle size of primary particles was 2.3 $\mu$m. FIG. 1 is an XRD pattern of the material in Example 1 of the present disclosure.

Embodiment2

$\Phi_M$=48.235 nm$^{-1}$ is designed to prepare a $NaCu_{0.1}Ni_{0.325}Fe_{0.1}La_{0.05}Mn_{0.2}Ti_{0.225}O_2$ positive electrode material.

$La_2O_3$, CuO, NiO, $Fe_2O_3$, $MnO_2$, and $TiO_2$ were selected as a precursor, $Na_2CO_3$ and NaOH were selected as a sodium source; and the precursor and the sodium source at corresponding proportions were weighed, ball-milled for 6 hours, and sintered at 950°C for 15 hours to obtain a $NaCu_{0.1}Ni_{0.325}Fe_{0.1}La_{0.05}Mn_{0.2}Ti_{0.225}O_2$ positive electrode material, where a particle size of primary particles was 2.0 $\mu$m. FIG. 2 is an XRD pattern of the material in Comparative Example 1 of the present disclosure.

Embodiment 3

$\Phi_M$=49.107 nm$^{-1}$ is designed to prepare a $NaCu_{1/9}Ni_{2/9}Fe_{1/3}Mn_{2/9}Ti_{1/9}O_2$ positive electrode material. CuO, NiO, $Fe_2O_3$, $MnO_2$, and $TiO_2$ were selected as a precursor, $Na_2CO_3$ and NaOH were selected as a sodium source; and the precursor and the sodium source at corresponding proportions were weighed, uniformly mixed, ball-milled for 6 hours, and sintered at 950°C for 15 hours to obtain a $NaCu_{1/9}Ni_{2/9}Fe_{1/3}Mn_{2/9}Ti_{1/9}O_2$ positive electrode material, where a particle size of primary particles was 1.8 $\mu$m.

Embodiment 4

$\Phi_M$=49.159 nm$^{-1}$ is designed to prepare a $NaCu_{0.1}Ni_{0.35}Fe_{0.1}Mn_{0.2}Ti_{0.25}O_2$ positive electrode material.

CuO, NiO, $Fe_2O_3$, $MnO_2$, and $TiO_2$ were selected as a precursor, $NaNO_3$ was selected as a sodium source; the precursor and the sodium source at corresponding proportions were weighed; and the precursor was ball-milled for 6 hours first, then ground and mixed with $NaNO_3$ in a mortar, and then sintered at 900°C for 15 hours to obtain a $NaCu_{0.1}Ni_{0.35}Fe_{0.1}Mn_{0.2}Ti_{0.25}O_2$ positive electrode material, where a particle size of primary particles was 1.5 $\mu$m. FIG. 3 is an XRD pattern of the material in Embodiment4 of the present invention.

Embodiment 5

$\Phi_M$=49.238 $nm^{-1}$ is designed to prepare a $NaCu_{0.05}Ni_{0.4}Fe_{0.1}Mn_{0.2}Ti_{0.25}O_2$ positive electrode material.
CuO, NiO, $Fe_2O_3$, $MnO_2$, and $TiO_2$ were selected as a precursor, $NaNO_3$ was selected as a sodium source; the precursor and the sodium source at corresponding proportions were weighed; and the precursor was ball-milled for 6 h first, then ground and mixed with $NaNO_3$ in a mortar, and then sintered at 900°C for 15 h to obtain a $NaCu_{0.05}Ni_{0.4}Fe_{0.1}Mn_{0.2}Ti_{0.25}O_2$ positive electrode material, where a particle size of primary particles was 1.5 μm.

Embodiment 6

$\Phi_M$=49.323 $nm^{-1}$ is designed to prepare a $NaLi_{0.05}Cu_{0.05}Ni_{0.3}Fe_{0.1}Mn_{0.2}Ti_{0.25}O_2$ positive electrode material.
$Li_2CO_3$, CuO, NiO, $Fe_2O_3$, $MnO_2$, and $TiO_2$ were selected as a precursor, $Na_2CO_3$ and NaOH were selected as a sodium source; and the precursor and the sodium source at corresponding proportions were weighed, ball-milled for 6 hours, and sintered at 950°C for 15 hours to obtain a $NaCu_{1/9}Ni_{2/9}Fe_{1/3}Mn_{2/9}Ti_{1/9}O_2$ positive electrode material, where a particle size of primary particles was 1.4 μm.

Embodiment 7

$\Phi_M$=50.095 $nm^{-1}$ is designed to prepare a $NaCu_{0.10}Ni_{0.35}Fe_{0.1}Mn_{0.3}Ti_{0.15}O_2$ positive electrode material.
$Li_2CO_3$, CuO, NiO, $Fe_2O_3$, $MnO_2$, and $TiO_2$ were selected as a precursor, $NaNO_3$ was selected as a sodium source; the precursor and the sodium source at corresponding proportions were weighed; and the precursor was ball-milled for 6 hours first, then ground and mixed with $NaNO_3$ in a mortar, and then sintered at 900°C for 15 hours to obtain a $NaCu_{0.05}Ni_{0.4}Fe_{0.1}Mn_{0.2}Ti_{0.25}O_2$ positive electrode material, where a particle size of primary particles was 1.5 μm.

Embodiment 8

$\Phi_M$=50.095 $nm^{-1}$ is designed to prepare a $NaCu_{0.10}Ni_{0.35}Fe_{0.1}Mn_{0.3}Ti_{0.15}O_2$ positive electrode material.
First, a Ni-Fe-Mn hydroxide precursor was obtained by a co-precipitation method, the co-precipitation method included: a deionized water solution of $NiSO_4.6H_2O$, $FeSO_4.7H_2O$, and $MnSO_4.H_2O$ was prepared according to a proportion of Ni, Fe, and Mn in a molecular formula $NaCu_{0.10}Ni_{0.35}Fe_{0.1}Mn_{0.3}Ti_{0.15}O_2$, where a configuration concentration was 2 mol/L; alkali liquor was prepared from sodium hydroxide, ammonia water, and deionized water, where a concentration of sodium hydroxide was 4 mol/L and a concentration of ammonia was 1 mol/L; an appropriate amount of deionized water was added into a reaction kettle and nitrogen was introduced, the mixture was heated to 60°C and kept temperature , and stirred at a rate of 1000 r/min, then both a transition metal solution and the alkali liquor were dropwise added into the mixture, and the pH was maintained between 11.5 and 12; and after the reaction was finished, a precipitate was filtered, washed, and dried at 110°C for 12 hours to obtain the Ni-Fe-Mn hydroxide precursor with uniformly distributed transition metal elements. The Ni-Fe-Mn hydroxide precursor obtained in the above step, CuO, and $TiO_2$ were selected as a precursor, and $Na_2CO_3$ and NaOH were selected as a sodium source; the precursor and the sodium source at corresponding proportions were weighed, where the sodium source was excessive by 10%; and the precursor and the sodium source were fully mixed and ball-milled for 6 hours, and sintered at 1050°C for 24 hours to obtain a $NaCu_{0.10}Ni_{0.35}Fe_{0.1}Mn_{0.3}Ti_{0.15}O_2$ positive electrode material, where a particle size of primary particles was 6.20 μm. FIG. 4 is an SEM image of the material in Example 8 of the present disclosure.

Embodiment 9

$\Phi_M$=50.146 $nm^{-1}$ is designed to prepare a $NaCu_{1/9}Ni_{2/9}Fe_{1/3}Mn_{3/9}O_2$ positive electrode material.
CuO, NiO, $Fe_2O_3$, $MnO_2$, and $TiO_2$ were selected as a precursor, $Na_2CO_3$ and NaOH were selected as a sodium source; the precursor and the sodium source at corresponding proportions were weighed, where the sodium source was excessive by 3%; the precursor and the sodium source were uniformly mixed, ball-milled for 6 hours, and sintered at 950°C for 15 hours to obtain a $NaCu_{1/9}Ni_{2/9}Fe_{1/3}Mn_{2/9}Ti_{1/9}O_2$ positive electrode material, where a particle size of primary particles was 2.0 μm.

Embodiment 10

$\Phi_M$=50.199 $nm^{-1}$ is designed to prepare a $NaCu_{0.1}Ni_{0.35}Mn_{0.3}Ti_{0.2}O_2$ positive electrode material.
CuO, NiO, $MnO_2$, and $TiO_2$ were selected as a precursor, $Na_2CO_3$ was selected as a sodium source; the precursor and the sodium source at corresponding proportions were weighed, where the sodium source was excessive by 3%; and the precursor and the sodium source were uniformly mixed, ball-milled for 6 hours, and sintered at 900°C for 15

hours to obtain a $NaCu_{0.1}Ni_{0.35}Mn_{0.3}Ti_{0.2}O_2$ positive electrode material, where a particle size of primary particles was 1.6 μm.

Embodiment 11

$\Phi_M$=50.199 $nm^{-1}$ is designed to prepare a $NaCu_{0.1}Ni_{0.35}Mn_{0.3}Ti_{0.2}O_2$ positive electrode material.

CuO, NiOH, $MnO_2$, and $TiO_2$ were selected as a precursor, $Na_2CO_3$ and NaOH were selected as a sodium source; the precursor and the sodium source at corresponding proportions were weighed, where the sodium source was excessive by 30%; and the precursor and the sodium source were uniformly mixed, ball-milled for 6 hours, and sintered at 1200°C for 15 hours to obtain a $NaCu_{0.1}Ni_{0.35}Mn_{0.3}Ti_{0.2}O_2$ positive electrode material, where a particle size of primary particles was 10.5 μm. FIG. 5 is an SEM image of the material in Embodiment11 of the present invention.

Embodiment 12

$\Phi_M$=50.466 $nm^{-1}$ is designed to prepare a $Na_{0.9}Cu_{0.25}Fe_{0.4}Mn_{0.2}Ti_{0.15}O_2$ positive electrode material.

CuO, NiO, $Fe_2O_3$, $MnO_2$, and $TiO_2$ were selected as a precursor, $Na_2CO_3$ and NaO were selected as a sodium source; the precursor and the sodium source at corresponding proportions were weighed, where the sodium source was excessive by 3%; the precursor and the sodium source were uniformly mixed, ball-milled for 6 hours, and sintered at 950°C for 15 hours to obtain a $Na_{0.9}Cu_{0.25}Fe_{0.4}Mn_{0.2}Ti_{0.15}O_2$ positive electrode material, where a particle size of primary particles was 5.0 μm. FIG. 6 is an SEM image of the material in Embodiment 12 of the present disclosure.

Embodiment 13

$\Phi_M$=49.099 $nm^{-1}$ is designed to prepare a $NaCu_{0.10}Ni_{0.35}Fe_{0.1}Mn_{0.25}Ti_{0.15}Zr_{0.05}O_2$ positive electrode material. First, a Ni-Fe-Mn-Zr hydroxide precursor was obtained by a co-precipitation method, the co-precipitation method included: a deionized water solution of $NiSO_4\cdot6H_2O$, $FeSO_4\cdot7H_2O$, $MnSO_4\cdot H_2O$, and $Zr(SO_4)_2$ was prepared according to a proportion of Ni, Fe, Mn, and Zr in a molecular formula $NaCu_{0.10}Ni_{0.35}Fe_{0.1}Mn_{0.25}Ti_{0.15}Zr_{0.05}O_2$, where a configuration concentration was 2 mol/L; alkali liquor was prepared from sodium hydroxide, ammonia water, and deionized water, where a concentration of sodium hydroxide was 4 mol/L and a concentration of ammonia was 1 mol/L; an appropriate amount of deionized water was added into a reaction kettle and nitrogen was introduced, the mixture was heated to 60°C and kept a temperature, and stirred at a rate of 1000 r/min, then both a transition metal solution and the alkali liquor were dropwise added into the mixture, and the pH was maintained between 11.5 and 12; and after the reaction was finished, a precipitate was filtered, washed, and dried at 110°C for 12 hours to obtain the Ni-Fe-Mn-Zr hydroxide precursor with uniformly distributed transition metal elements. The Ni-Fe-Mn-Zr hydroxide precursor obtained in the above step, CuO, and $TiO_2$ were selected as a precursor, and $Na_2CO_3$ and NaOH were selected as a sodium source; the precursor and the sodium source at corresponding proportions were weighed, where the sodium source was excessive by 4%; and the precursor and the sodium source were fully mixed and ball-milled for 6 hours, and sintered at 900°C for 15 hours to obtain a $NaCu_{0.10}Ni_{0.35}Fe_{0.1}Mn_{0.25}Ti_{0.15}Zr_{0.05}O_2$ positive electrode material, where a particle size of primary particles was 3.1 μm. FIG. 7 is an SEM image of the material in Embodiment13 of the present disclosure.

Embodiment 14

$\Phi_M$=48.731 $nm^{-1}$ is designed to prepare a $NaCu_{0.10}Ni_{0.35}Fe_{0.1}Mn_{0.25}Ti_{0.15}Sn_{0.05}O_2$ positive electrode material.

CuO, NiO, $Fe_2O_3$, $MnO_2$, $TiO_2$, and $SnO_2$ were selected as a precursor, $Na_2CO_3$ was selected as a sodium source; the precursor and the sodium source at corresponding proportions were weighed, where the sodium source was excessive by 5%; the precursor and the sodium source were uniformly mixed, ball-milled for 6 hours, and sintered at 950°C for 15 hours to obtain a $NaCu_{0.10}Ni_{0.35}Fe_{0.1}Mn_{0.25}Ti_{0.15}Sn_{0.05}O_2$ positive electrode material, where a particle size of primary particles was 2.1 μm.

Embodiment 15

$\Phi_M$=49.634 $nm^{-1}$ is designed to prepare a $NaMg_{0.02}Cu_{0.08}Ni_{0.35}Fe_{0.1}Mn_{0.25}Ti_{0.2}O_2$ positive electrode material. CuO, MgO, NiO, $Fe_2O_3$, $MnO_2$, $TiO_2$, and $SnO_2$ were selected as a precursor, $Na_2CO_3$ and NaOH were selected as a sodium source; the precursor and the sodium source at corresponding proportions were weighed, where the sodium source was excessive by 10%; the precursor and the sodium source were uniformly mixed, ball-milled for 6 hours, and sintered at 1000°C for 15 hours to obtain a $NaMg_{0.02}Cu_{0.008}Ni_{0.35}Fe_{0.1}Mn_{0.25}Ti_{0.2}O_2$ positive electrode material, where a particle size of primary particles was 5.6 μm.

Embodiment 16

$\Phi_M$=48.637 $nm^{-1}$ is designed to prepare a $NaCu_{0.1}Ni_{0.335}Fe_{0.1}Lu_{0.03}Mn_{0.185}Ti_{0.25}O_2$ positive electrode material.

CuO, MgO, NiO, $Fe_2O_3$, $MnO_2$, $TiO_2$, and $SnO_2$ were selected as a precursor, $Na_2CO_3$ and NaOH were selected as a sodium source; the precursor and the sodium source at corresponding proportions were weighed, where the sodium source was excessive by 10%; the precursor and the sodium source were uniformly mixed, ball-milled for 6 hours, and sintered at 1000°C for 15 hours to obtain a $NaCu_{0.1}Ni_{0.335}Fe_{0.1}Lu_{0.03}Mn_{0.185}Ti_{0.25}O_2$ positive electrode material, where a particle size of primary particles was 2.3 μm.

Embodiment 17

($\Phi_M$=48.649 $nm^{-1}$ is designed to prepare a $NaCu_{0.10}Ni_{0.33}Fe_{0.1}Sb_{0.04}Mn_{0.18}Ti_{0.25}O_2$ positive electrode material. $Li_2CO_3$, CuO, NiO, $Fe_2O_3$, $Sb_2O_3$, $MnO_2$, and $TiO_2$ were selected as a precursor, $Na_2O_2$ was selected as a sodium source; the precursor and the sodium source at corresponding proportions were weighed, where $Na_2O_2$ is excessive by 8%; the precursor was ball-milled for 6 hours first, then ground and mixed with $Na_2O_2$ under inert gas atmospheric protection in a mortar; the mixture was pressed into a wafer with a diameter of 15 mm under a pressure of 10 MPa; and then the wafer was sintered in a synthesized air atmosphere at 900°C for 15 hours to obtain a $NaCu_{0.10}Ni_{0.33}Fe_{0.1}Sb_{0.04}Mn_{0.18}Ti_{0.25}O_2$ positive electrode material, where a particle size of primary particles was 8.3 μm.

Embodiment 18

$\Phi_M$=48.637 $nm^{-1}$ is designed to prepare a $NaLi_{0.02}Cu_{0.1}Ni_{0.3}Fe_{0.16}Mn_{0.2}Ti_{0.2}Bi_{0.02}O_2$ positive electrode material.

CuO, $LiOH\cdot H_2O$, NiO, $Fe_2O_3$, $MnO_2$, $TiO_2$, and $Bi_2O_3$ were selected as a precursor, $Na_2CO_3$ and NaOH were selected as a sodium source; the precursor and the sodium source at corresponding proportions were weighed, where the sodium source was excessive by 10%; the precursor and the sodium source were uniformly mixed, ball-milled for 6 hours, and sintered at 1000°C for 15 hours to obtain a $NaLi_{0.02}Cu_{0.1}Ni_{0.3}Fe_{0.16}Mn_{0.2}Ti_{0.2}Bi_{0.02}O_2$ positive electrode material, where a particle size of primary particles was 2.0 μm.

Embodiment 19

$\Phi_M$=48.587 $nm^{-1}$ is designed to prepare a $NaCu_{1/9}Ni_{2/9}Fe_{1/3}Mn_{1/6}Ti_{1/6}O_2$ positive electrode material. CuO, NiO, $Fe_2O_3$, $MnO_2$, and $TiO_2$ were selected as a precursor, $Na_2CO_3$ and NaOH were selected as a sodium source; and the precursor and the sodium source at corresponding proportions were weighed, uniformly mixed, ball-milled for 6 hours, and sintered at 950°C for 15 hoursto obtain a $NaCu_{1/9}Ni_{2/9}Fe_{1/3}Mn_{1/6}Ti_{1/6}O_2$ positive electrode material, where a particle size of primary particles was 1.6 μm.

Embodiment 20

$\Phi_M$=49.858 $nm^{-1}$ is designed to prepare a $NaCu_{1/9}Ni_{1/3}Fe_{1/9}Mn_{5/18}Ti_{1/6}O_2$ positive electrode material. CuO, NiO, $Fe_2O_3$, $MnO_2$, and $TiO_2$ were selected as a precursor, $Na_2CO_3$ and NaOH were selected as a sodium source; and the precursor and the sodium source at corresponding proportions were weighed, uniformly mixed, ball-milled for 6 hours, and sintered at 1000°C for 15 hours to obtain a $NaCu_{1/9}Ni_{2/9}Fe_{1/3}Mn_{1/6}Ti_{1/6}O_2$ positive electrode material, where a particle size of primary particles was 3.4 μm.

Comparative Example 1

$\Phi_M$=50.323 $nm^{-1}$ is designed to prepare a $NaNi_{1/3}Fe_{1/3}Mn_{1/3}O_2$ positive electrode material.

First, a Ni-Fe-Mn hydroxide precursor was obtained by a co-precipitation method, the co-precipitation method included: a deionized water solution of $NiSO_4\cdot 6H_2O$, $FeSO_4\cdot 7H_2O$, and $MnSO_4\cdot H_2O$ was prepared according to a proportion of Ni, Fe, and Mn in a molecular formula $NaNi_{1/3}Fe_{1/3}Mn_{1/3}O_2$, where a configuration concentration was 2 mol/L; alkali liquor was prepared from sodium hydroxide, ammonia water, and deionized water, where a concentration of sodium hydroxide was 4 mol/L and a concentration of ammonia was 1 mol/L; an appropriate amount of deionized water was added into a reaction kettle and nitrogen was introduced, the mixture was heated to 60°C and kept a temperature , and stirred at a rate of 1000 r/min, then both a transition metal solution and the alkali liquor were dropwise added into the mixture, and the pH was maintained between 11.5 and 12; and after the reaction was finished, a precipitate was filtered, washed, and dried at 110°C for 12 h to obtain the Ni-Fe-Mn hydroxide precursor with uniformly distributed transition metal elements. The Ni-Fe-Mn hydroxide precursor obtained in the above step was selected as a precursor, and $Na_2CO_3$ was

selected as a sodium source; the precursor and the sodium source at corresponding proportions were weighed, where the sodium source was excessive by 2%; and the precursor and the sodium source were fully mixed in a mortar, and sintered at 900°C for 15 hours to obtain a $NaNi_{1/3}Fe_{1/3}Mn_{1/3}O_2$ positive electrode material, where a particle size of primary particles was 0.5 μm. FIG. 8 is an SEM image of a material in Comparative Example 1 of the present disclosure.

Comparative Example 2

$\Phi_M$=51.085 $nm^{-1}$ is designed to prepare a $NaNi_{0.4}Fe_{0.2}Mn_{0.4}O_2$ positive electrode material.

First, a Ni-Fe-Mn hydroxide precursor was obtained by a co-precipitation method, the co-precipitation method included: a deionized water solution of $NiSO_4 \cdot 6H_2O$, $FeSO_4 \cdot 7H_2O$, and $MnSO_4 \cdot H_2O$ was prepared according to a proportion of Ni, Fe, and Mn in a molecular formula $NaNi_{0.4}Fe_{0.2}Mn_{0.4}O_2$, where a configuration concentration was 2 mol/L; alkali liquor was prepared from sodium hydroxide, ammonia water, and deionized water, where a concentration of sodium hydroxide was 4 mol/L and a concentration of ammonia was 1 mol/L; an appropriate amount of deionized water was added into a reaction kettle and nitrogen was introduced, the mixture was heated to 60°C and kept a temperature, and stirred at a rate of 1000 r/min, then both a transition metal solution and the alkali liquor were dropwise added into the mixture, and the pH was maintained between 11.5 and 12; and after the reaction was finished, a precipitate was filtered, washed, and dried at 110°C for 12 h to obtain the Ni-Fe-Mn hydroxide precursor with uniformly distributed transition metal elements. The Ni-Fe-Mn hydroxide precursor obtained in the above step was selected as a precursor, and $NaNO_3$was selected as a sodium source; the precursor and the sodium source at corresponding proportions were weighed, where the sodium source was excessive by 4%; and the precursor and the sodium source were fully mixed in a mortar, and sintered at 830°C for 15 hours to obtain a $NaNi_{0.4}Fe_{0.2}Mn_{0.4}O_2$ positive electrode material, where a particle size of primary particles was 0.5 μm.

Comparative Example 3

$\Phi_M$=51.134 $nm^{-1}$ is designed to prepare a $NaCu_{0.1}Ni_{0.4}Mn_{0.4}Ti_{0.1}O_2$ positive electrode material. CuO, NiO, $MnO_2$, and $TiO_2$ were selected as a precursor, $Na_2CO_3$ was selected as a sodium source; and the precursor and the sodium source at corresponding proportions were weighed, ball-milled for 6 hours, and sintered at 900°C for 15 hours to obtain a $NaCu_{0.1}Ni_{0.4}Mn_{0.4}Ti_{0.1}O_2$ positive electrode material, where a particle size of primary particles was 2.0 μm.

The size of the primary particles in the present invention is obtained by statistically analyzing the SEM image by Nano Measurer1.2 software. The model number of SEM is Hitachi S-4800.

An XRD collecting device is Bruker-AXS D8 Advance (with Cu Kα radiation, λ=1.5405 Å).

After the layered oxide positive materials with air stability prepared in the above examples and the materials in the comparative examples are deteriorated in the strict standard condition, the sodium loss amount is quantitatively detected. Specific steps are as follows:

1 g of the positive electrode material was placed in an environment whose relative humidity was constantly 60% and concentration of carbon dioxide was constantly 600 ppm for 48 h for deterioration, where the environment was maintained by a seal pot including a gas inlet path and a gas outlet path, a saturated salt solution placed at the bottom of the seal pot, a standard gas, and a control gas path, the saturated salt solution was a saturated sodium bromide (NaBr) solution, the standard gas included 78.9% $N_2$+21.0% $O_2$+0.1% $CO_2$ at a volume ratio, the control gas path included a pipeline, a flowmeter, and a preposed gas washer, and the flow rate was controlled at 50 ml/min.

The deteriorated sample was taken out for pre-treatment, and all possible deteriorating byproducts were converted into sodium carbonate, where the pre-treatment included: vacuum treatment was performed for 6 hours, the sample was roasted in a glovebox filled with argon at 110°C for 6 hours, the sample was left to stand in $CO_2$ at constant temperature for 3 hours, and the sample was roasted again in the glovebox filled with argon at 110°C for 6 h.

20 mg of the pre-treated deteriorated sample was weighed, and the sodium loss amount was analyzed by using titration gas chromatography, including: the weighed deteriorated sample was sealed in an argon environment, then a sufficient amount of 1 mol/L sulfuric acid was added until no bubbles were generated, the generated amount of $CO_2$ was analyzed by gas chromatography to induce the sodium loss amount, and the used gas chromatograph was Shimadzu Nexis GC-2030.

The above deterioration test and quantification are described in detail. During deterioration, sodium ions in $Na_xMO_2$ (M is mainly a transition metal) can be exfoliated by charge compensation since M is oxidized or are exchanged with hydrogen ions to be exfoliated to finally generate $Na_{x-w}H_vMO_2$ ($0.9 \le x \le 1$, $0 \le w \le 1$, $0 \le v \le 1$) with a sodium-deficient phase; hydrogen ions which are light can be ignored, and thus, it is denoted as $Na_{x-w}MO_2$, w is the sodium loss amount; besides, the exfoliated sodium ions form byproducts on the surface, with a major component of $Na_2CO_3 \cdot nH_2O$ ($0 \le n \le 100$), which may further include $NaHCO_3$ and $NaOH \cdot nH_2O$ ($0 \le n \le 100$); the pre-treatment can convert all byproducts into sodium carbonate $Na_2CO_3$:

$$Na_xMO_2 \underbrace{\xrightarrow[21\%\,O_2+79\%\,N_2+0.1\%\,CO_2]{H_2O(g)}}_{(i)} \underbrace{Na_{x-w}MO_2 + Na_2CO_3\cdot nH_2O\ (+NaHCO_3 + NaOH\cdot nH_2O)}_{(a)}$$

$$\underset{(ii)}{\xrightarrow{\text{perform vacuumizing for 6}}} \underset{(iii)}{\xrightarrow{\text{heat at 100°C for 6}}} \underbrace{Na_{x-w}MO_2 + Na_2CO_3(+NaOH)}_{(b)} \underset{(iv)}{\xrightarrow{CO_2\text{ to stand a room temperature for 3 h}}} \underbrace{Na_{x-w}MO_2 + Na_2CO_3(+NaHCO_3)}_{(c)}$$

$$\underset{(v)}{\xrightarrow{\text{heat at 110°C for 6 h}}} \underbrace{Na_{x-w}MO_2 + Na_2CO_3}_{(d)}$$

After deterioration and pre-treatment of, the material is converted into a mixture of an oxide $Na_{x-w}MO_2$ with the sodium-deficient phase and sodium carbonate, and the corresponding relationship of the mass satisfies:

$$n_0 \underbrace{Na_xMO_2}_{a_0} \sim n_0 \underbrace{Na_{x-w}MO_2}_{a} + n_0\frac{w}{2}\underbrace{Na_2CO_3}_{b} \quad \text{(formula 1);}$$

in the formula, $n_0$ represents a molar weight; $a_0$ represents an initial sample $Na_xMO_2$ whose relative molecular mass is $M_{a0}$ and mass is $m_{a0}$; a represents the deteriorated and pre-treated oxide $Na_{x-w}MO_2$ with the sodium-deficient phase, whose relatively molecular mass can be presented as $M_a = M_{a0} - 22.990w$ (formula 2) and mass is $m_a$; and b represents $Na_2CO_3$, whose relative molecular mass is 105.988 g/mol and mass is $m_b$.

After deterioration and pre-treatment, the mass fraction f of $Na_2CO_3$ in the mixture can be represented as:

$$f = \frac{m_b}{m_a + m_b} = \frac{n_0\frac{w}{2}M_b}{n_0M_a + n_0\frac{w}{2}M_b} = \frac{w\cdot M_b}{2M_{a_0} - 45.980w + w\cdot M_b} \quad \text{(formula 3);}$$

f can be measured by titration gas chromatography: $Na_2CO_3$ in the deteriorated mixture is converted into $CO_2$ by using sulfuric acid titration, and then the amount of $CO_2$ generated is quantitatively analyzed by using gas chromatograph; according to a corresponding relationship:

$$n_0\frac{w}{2}\underbrace{Na_2CO_3}_{b} \sim n_0\frac{w}{2}CO_2 \quad \text{(formula 4);}$$

the mass of $Na_2CO_3$ can be obtained, so that f is obtained to induce the sodium loss amount w:

$$w = \frac{2M_{a_0}}{\frac{M_b}{f} + 45.980 - M_b} \quad \text{(formula 5);}$$

The electrochemical performance of the layered oxide positive materials with air stability prepared in the above examples and the materials in the comparative examples before and after deterioration and pre-treatment is compared:

Half battery assembly: the layered oxide positive electrode materials in the Examples and Comparative Examples before and after deterioration were pulped with conductive carbon black (Super P) and polyvinylidene fluoride (PVDF) respectively in a N-methylpyrrolidone solution at a mass ratio of 80: 10: 15 under protection of an inertial atmosphere and coated on an aluminum foil, the aluminum foil was vacuum-dried and cut into a plate whose diameter is 10 mm, a solution of 1 mol/L $NaClO_4$/propylene carbonate (PC): ethylene carbonate (EC): diethyl carbonate (DEC) (PC: EC: DEC=1: 1: 1 (volume ratio)) was taken as an electrolyte solution, a glass fiber was taken as a separator, and a CR2032

button battery was assembled in an argon glovebox. The plate matched with a hard card cathode to assemble a full battery.

Charging and discharging test: the charging and discharging voltage range of the button half battery is 2.0-4.0V, the voltage range of the fully battery is 1.0-4.0V, the test rate is 0.2C, all electrochemical performance tests are performed at room temperature, and the test device is LAND CT3002A. Results are shown in Table 2.

Table 2

| Positive electrode material | Weighted average ionic potential of cations other than sodium ions/ (nanometer$^{-1}$) | Particle size of primary particles (micron) | Sodium loss amount after deterioration | Specific capacity before deterioration (mAh/g) | Specific capacity after deterioration (mAh/g) |
|---|---|---|---|---|---|
| Comparative Example 1 | 50.323 | 0.5 | 0.532 | 146 | 68 |
| Comparative Example 2 | 51.085 | 0.5 | 0.632 | 150 | 55 |
| Comparative Example 3 | 51.134 | 1.5 | 0.401 | 144 | 86 |
| Embodiment 1 | 50.076 | 2.3 | 0.089 | 133 | 121 |
| Embodiment 2 | 48.235 | 2.0 | 0.021 | 130 | 127 |
| Embodiment 3 | 49.107 | 1.8 | 0.058 | 134 | 126 |
| Embodiment 4 | 49.159 | 1.5 | 0.054 | 141 | 133 |
| Embodiment 5 | 49.238 | 1.5 | 0.112 | 143 | 127 |
| Embodiment 6 | 49.323 | 1.4 | 0.056 | 143 | 135 |
| Embodiment 7 | 50.095 | 1.6 | 0.162 | 137 | 115 |
| Embodiment 8 | 50.095 | 6.2 | 0.054 | 136 | 129 |
| Embodiment 9 | 50.146 | 2.0 | 0.154 | 136 | 115 |
| Embodiment 10 | 50.199 | 1.6 | 0.234 | 135 | 103 |
| Embodiment 11 | 50.199 | 10.5 | 0.034 | 133 | 128 |
| Embodiment 12 | 50.466 | 5.0 | 0.105 | 126 | 113 |
| Embodiment 13 | 49.099 | 3.1 | 0.048 | 132 | 126 |
| Embodiment 14 | 48.731 | 2.1 | 0.053 | 130 | 123 |
| Embodiment 15 | 49.634 | 5.6 | 0.076 | 140 | 129 |
| Embodiment 16 | 48.637 | 2.3 | 0.032 | 131 | 127 |
| Embodiment 17 | 48.649 | 8.3 | 0.021 | 132 | 129 |
| Embodiment 18 | 48.569 | 2.0 | 0.045 | 128 | 122 |
| Embodiment 19 | 48.587 | 1.6 | 0.050 | 130 | 125 |
| Embodiment 20 | 49.858 | 3.4 | 0.098 | 141 | 132 |

More intuitively, the relational graph between sodium loss amounts and weighted average cationic potentials and particle sizes of primary particles after materials are placed in a strict standard deterioration condition for 48 h in Embodiments and Comparative Examples is exhibited in FIG. 9. It can be seen that the sodium loss amount and the weighted average ionic potential of the material are closely related to the particle size of the primary particles. With the reduction of the weighted average ionic potential and the increase of the particle size of the primary particles, the sodium loss amount of the material is decreased rapidly, and the air stability is effectively improved. For example, with a close particle size of the primary particles, Embodiment2 has a relatively low weighted average ionic potential, and the sodium loss amount is lower than that in Embodiments 7, 8, 9, 14, 16, and 18 but is far lower than that in Comparative Example 3; with a close weighted average ionic potential, Embodiment11 has a relatively great particle size of the primary particles, and the sodium loss amount is less than that in Embodiments 1, 8, and 7 but is far less than that in Comparative Example 1;

and in Embodiment17 with low average ionic potential and great particle size of the primary particles, the sodium loss amount is lower than that in Embodiment15 but is far less than that in Comparative Example 3. In comparison, although in Comparative Example 1, the weighted average ionic potential is lower than 51 $nm^{-1}$, the particle size is too less and the sodium loss amount reaches 0.532; although in Comparative Example 3, the particle size of the primary particles is greater than 1.4 $\mu$m, the weighted average ionic potential is higher than 51 $nm^{-1}$ and the sodium loss amount reaches 0.401; and in Comparative Example 2, the weighted average ionic potential is too high, the particle size of the primary particles is too less, and the sodium loss amount reaches up to 0.632. It can be seen that by using the method provided by the present disclosure, the sodium loss amount of the sodium ion layered oxide positive electrode material after deterioration in air can be greatly reduced.

FIG. 10 is a comparison diagram of charging and discharging curves of half battery tests of materials before and after deterioration in Embodiment4; FIG. 11 is a comparison diagram of charging and discharging curves of half battery tests of materials before and after deterioration in Embodiment7; FIG. 12 is a comparison diagram of charging and discharging curves of half battery tests of materials before and after deterioration in Comparative Example 1; and FIG. 13 is a comparison diagram of charging and discharging curves of half battery tests of materials before and after deterioration in Comparative Example 2. It can be seen that compared with Examples of the present invention, in the Comparative Examples of the method of the present invention, the specific capacity after deterioration is attenuated severely, further indicating that the present invention can effectively solve the problem that the conventional layered oxide positive electrode material of the sodium ion battery is poor in air stability and provide a higher reversible specific capacity.

The above specific implementations further describe the objectives, technical solutions, and beneficial effects in detail. It should be understood that the above is merely the specific implementations of the present invention and is not intended to limit the protection scope of the present disclosure. Any modifications, equivalent replacements, improvements, etc., made within the spirit and principle of the present invention shall be included in the protection scope of the present disclosure.

## Claims

1. A method for improving air stability of a sodium ion layered oxide positive electrode material, comprising: regulating a weighted average ionic potential $\Phi_M$ of cations other than sodium ions of a copper-based sodium ion layered oxide positive electrode material $Na_xCu_yM_zO_2$ and regulating a particle size of primary particles of a crystal, so that 47.5 nm-1$\leq\Phi_M\leq$ 50.5 $nm^{-1}$ and 1.4 $\mu$m$\leq$r$\leq$100 $\mu$m, thereby reducing the sodium loss amount of the sodium ion layered oxide positive electrode material after deterioration in air and obtaining a layered oxide positive electrode material of a sodium ion battery with air stability,
wherein M is selected from one or more of $Ni^{2+}$, $Zn^{2+}$, $Mg^{2+}$, $Fe^{3+}$, $La^{3+}$, $Lu^{3+}$, $Sb^{3+}$, $Mn^{4+}$, $Ti^{4+}$, $Zr^{4+}$, $Sn^{4+}$, and $Bi^{5+}$; and 0.9$\leq$x$\leq$1, and y+z=1.

2. The method according to claim 1, wherein the ionic potential is a ratio ($\Phi$) of an ionic charge number (Z) to an ionic radius (r, nanometer) of an ion, i.e., $\Phi$=Z/r, the weighted average ionic potential $\Phi$M is a weighted average of the ionic potentials of cations other than sodium ions with each cation weighted according to its molar fraction , i.e., $\Phi_M = \frac{\sum_i x_i\Phi_i}{\sum_i x_i} = \sum_i x_i\Phi_i = \sum_i x_i \frac{Z_i}{r_i}$ , where $x_i$ is a percentage occupied by an ion i and satisfies that the sum of all $x_i$ is 1; $\Phi_i$ is the ionic potential of the ion i, $Z_i$ is a charge number of the ion i, and $r_i$ is the ionic radius of the ion i.

3. The method according to claim 1, wherein the regulating a weighted average ionic potential $\Phi_M$ of cations other than sodium ions of a copper-based sodium ion layered oxide positive electrode material $Na_xCu_yMzO_2$ and regulating a particle size r of primary particles of a crystal comprise:
regulating the weighted average ionic potential $\Phi_M$ of cations other than sodium ions and the particle size r of primary particles of the crystal by changing stoichiometric ratios y and z of Cu and M in $Na_xCu_yMzO_2$.

4. The method according to claim 1, wherein the method for regulating the particle size r of primary particles of the crystal further comprises one or more of using excessive sodium carbonate, adding sodium hydroxide, sodium oxide or sodium peroxide as a flux, increasing or decreasing a sintering temperature, and prolonging or shortening a sintering time.

5. A layered oxide positive electrode material of a sodium ion battery with air stability obtained by the method according to

any one of claims 1-4.

**6.** A method for preparing the layered oxide positive electrode material of a sodium ion battery according to claim 5, comprising:

mixing a sodium source with a chemometric ratio of 100-130% of sodium needed, and a Cu-containing precursor and an M-containing precursor with needed chemometric ratios in proportion, and sintering the mixture at a high temperature of 800-1200°C to generate the layered oxide positive electrode material of the sodium ion battery, wherein

the sodium source comprises one or more of sodium oxide, sodium peroxide, sodium hydroxide, sodium carbonate, and sodium nitrate;

the Cu-containing precursor comprises one or more of a Cu-containing metal oxide, a Cu-containing metal carbonate, a Cu-containing metal nitrate, a Cu-containing metal oxalate, a Cu-containing metal acetate, a Cu-containing metal sulfate, and a Cu-containing metal hydroxide; and

the M-containing precursor comprises one or more of an M-containing metal oxide, a M-containing metal carbonate, a M-containing metal nitrate, a M-containing metal oxalate, a M-containing metal acetate, a M-containing metal sulfate, and a M-containing metal hydroxide, or a M-containing polymetallic hydroxide prepared by a co-precipitation method.

**7.** A positive electrode of a sodium ion secondary battery, comprising the layered oxide positive electrode material of a sodium ion battery obtained by the method according to according to claim 5.

**8.** The positive electrode according to claim 7, further comprising a conductive additive and a binder, wherein

the conductive additive comprises one or more of carbon black, acetylene black, a graphite powder, a carbon nanotube, graphene, and nitrogen-doped carbon; and

the binder comprises one or more of polyvinylidene fluoride PVDF, sodium alginate, sodium carboxymethylcellulose CMC, and styrene-butadiene rubber SBR.

**9.** A sodium ion battery, comprising the layered oxide positive electrode material of a sodium ion battery with air stability according to claim 5 or the positive electrode according to claim 7 or 8.

**10.** An electrical device, comprising the sodium ion battery according to claim 9.

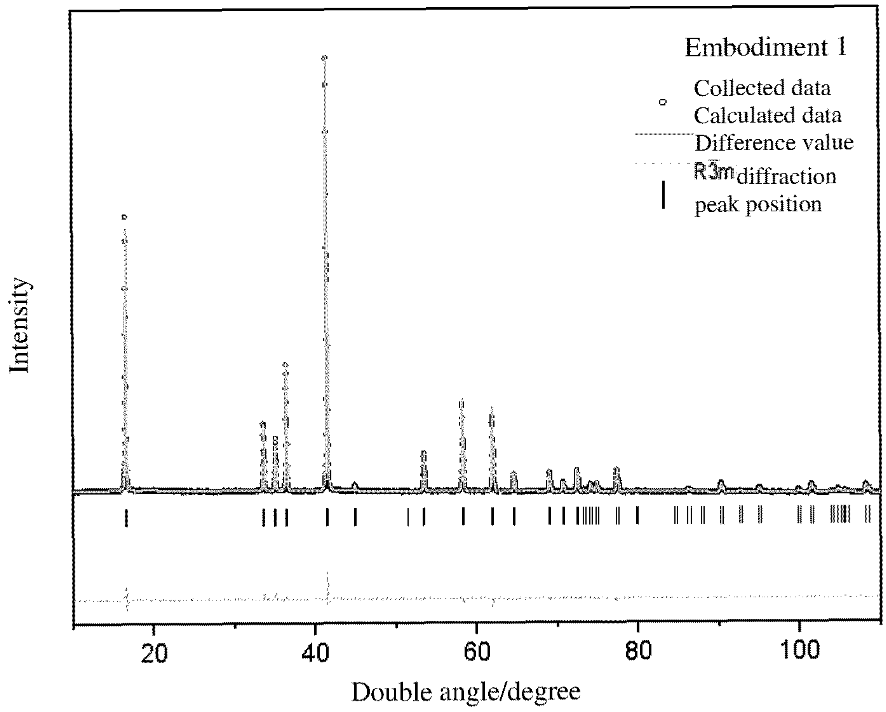
Embodiment 1
Collected data
Calculated data
Difference value
R3̄m diffraction peak position
Intensity
20
40
60
80
100
Double angle/degree

FIG. 1

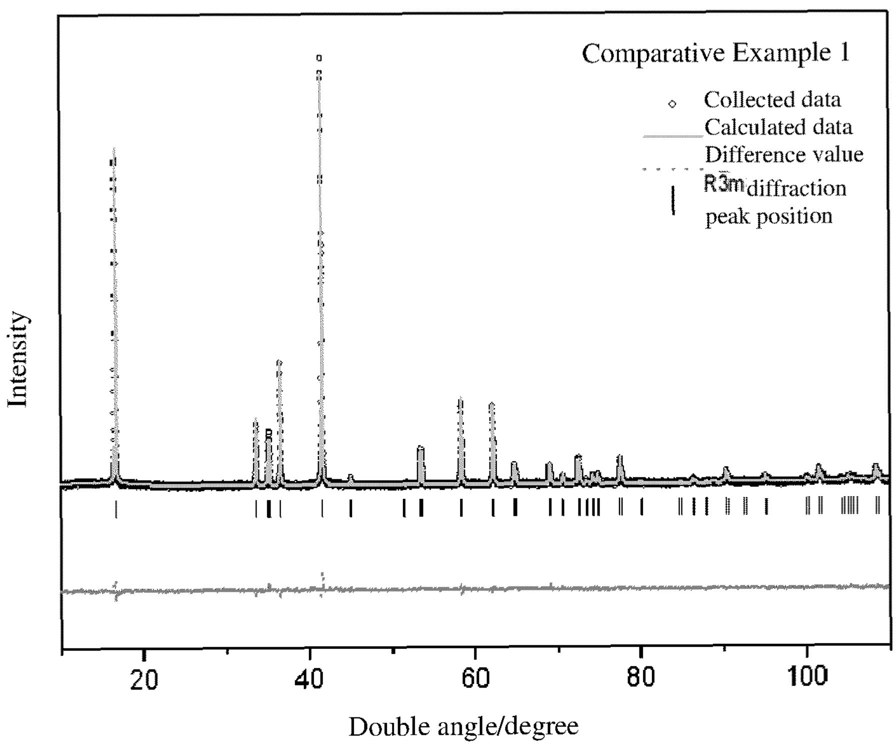
Comparative Example 1
Collected data
Calculated data
Difference value
R3̄m diffraction peak position
Intensity
20
40
60
80
100
Double angle/degree

FIG. 2

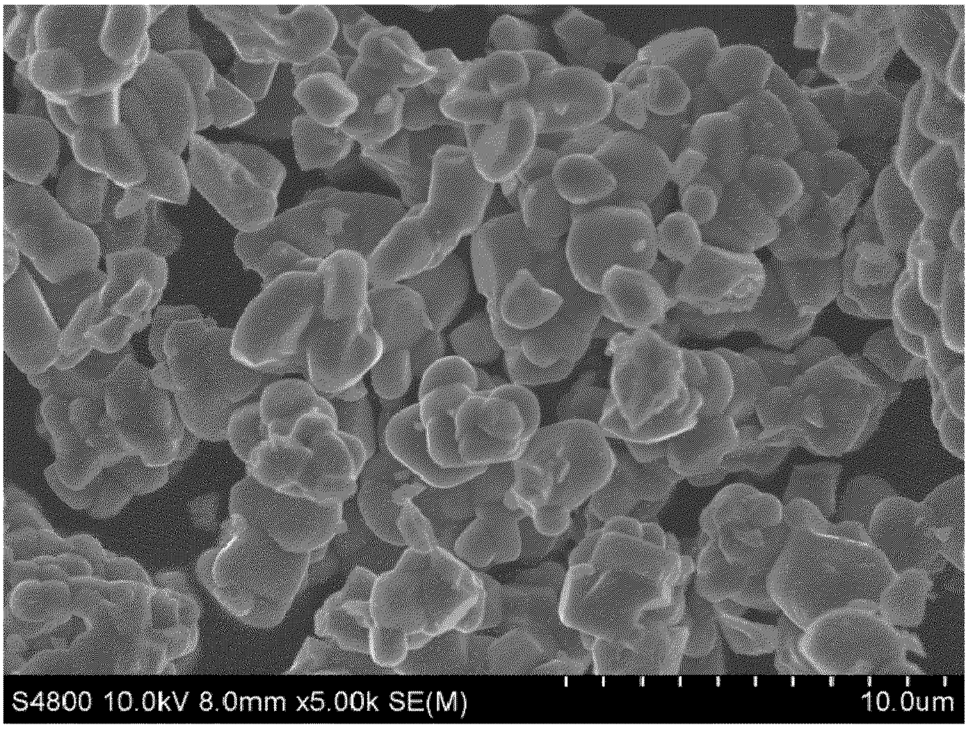
S4800 10.0kV 8.0mm x5.00k SE(M)
10.0um

FIG. 3

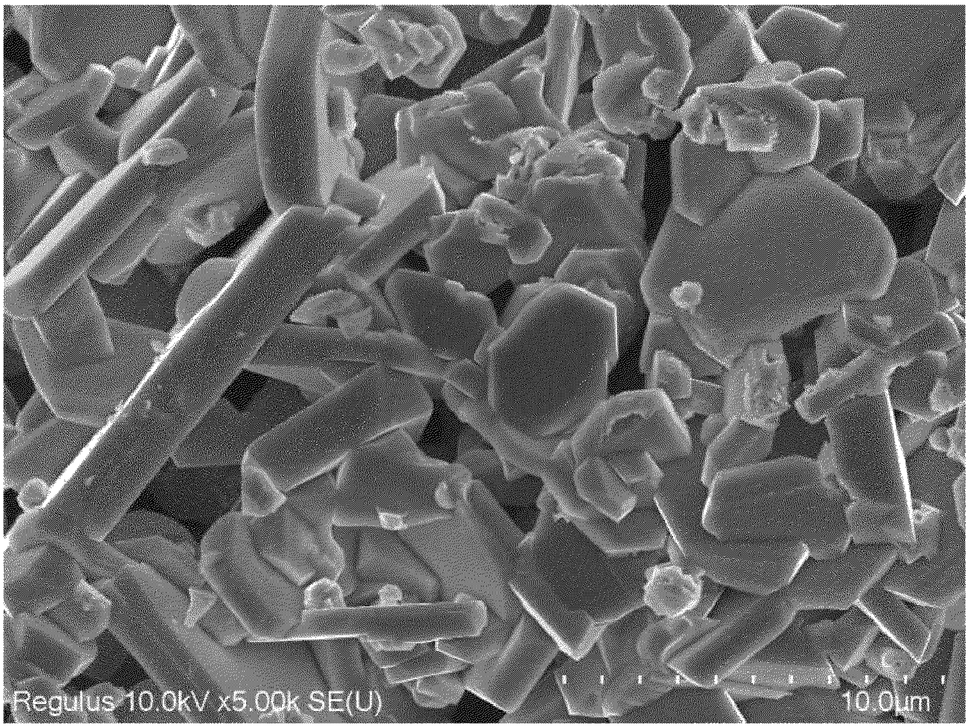
Regulus 10.0kV x5.00k SE(U)
10.0μm

FIG. 4

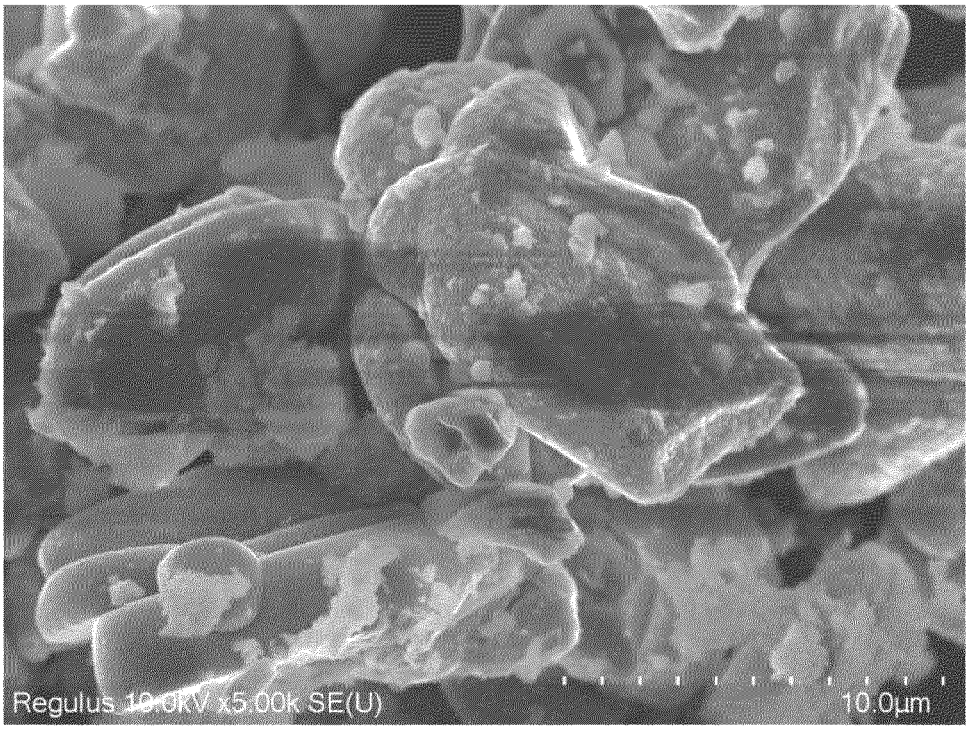


FIG. 5

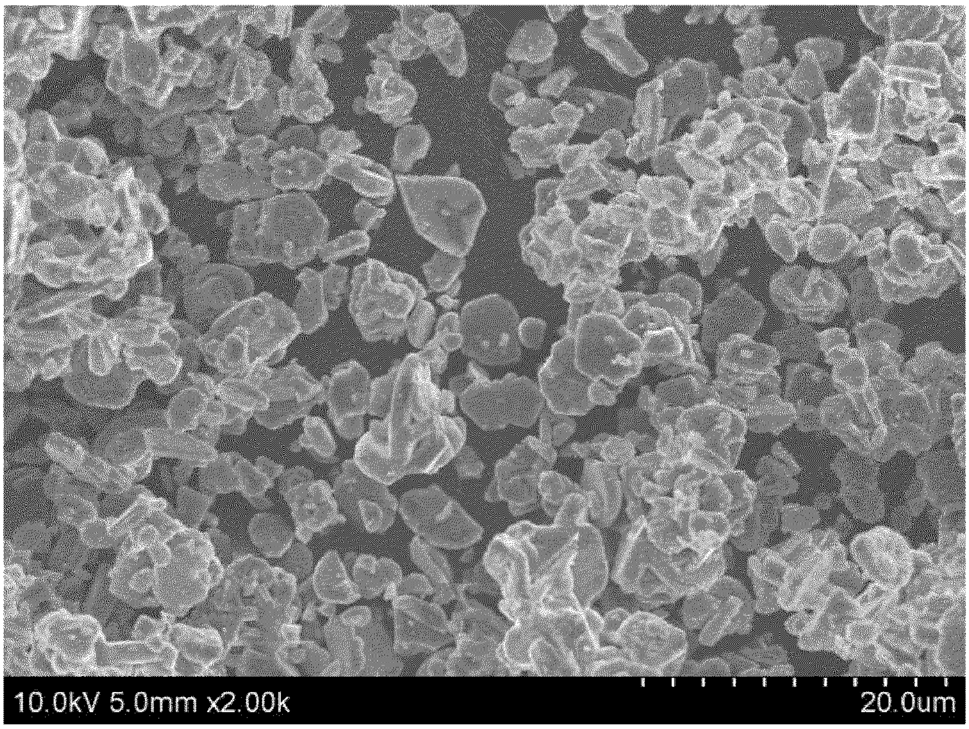


FIG. 6

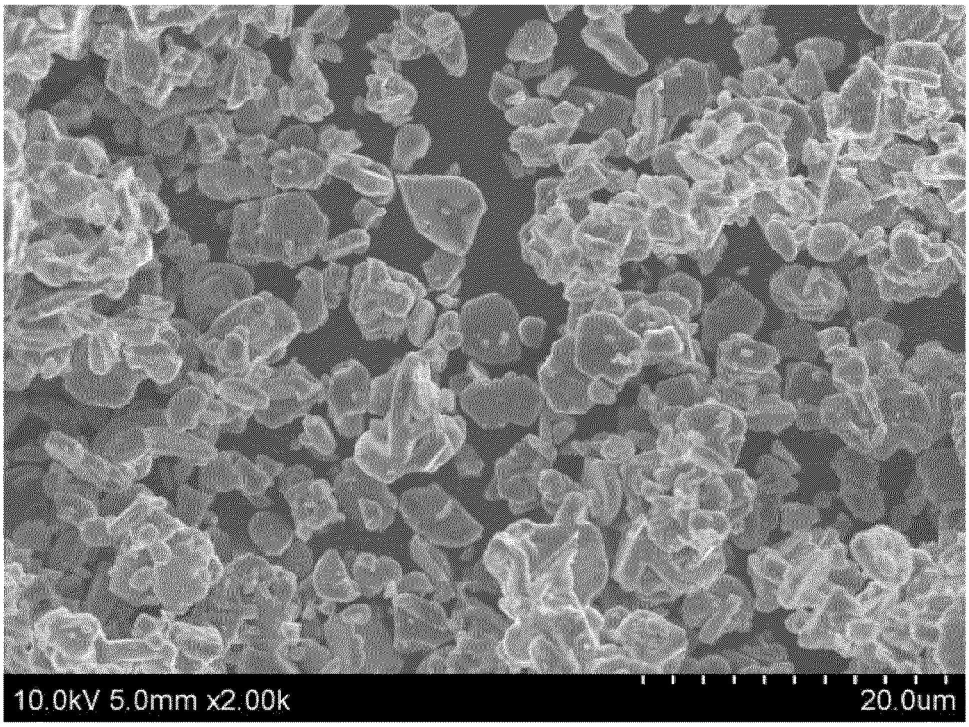


FIG. 7

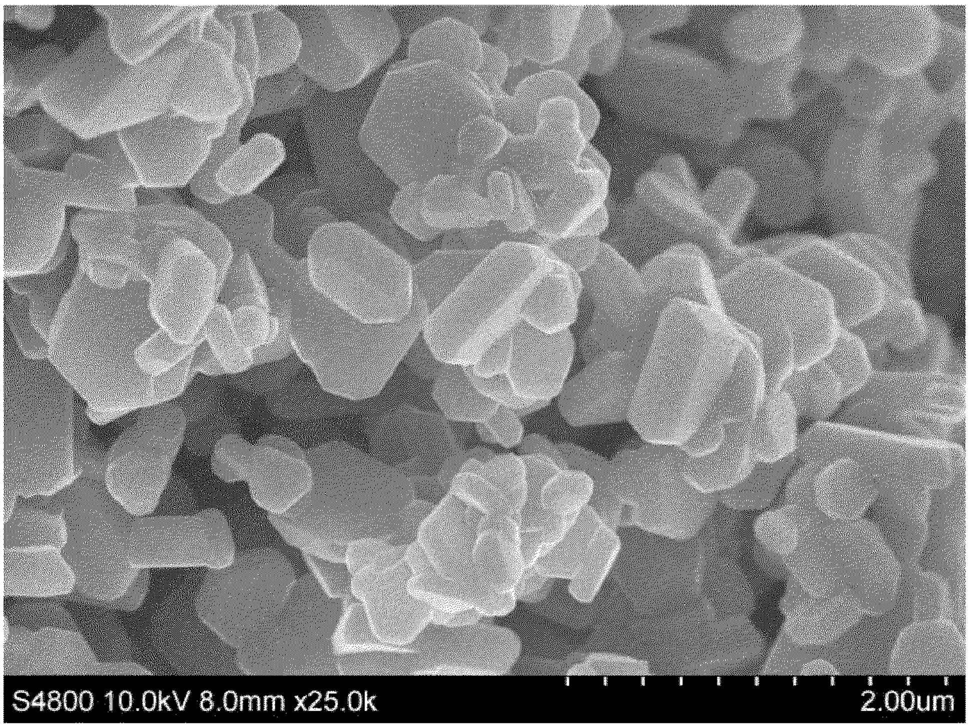


FIG. 8

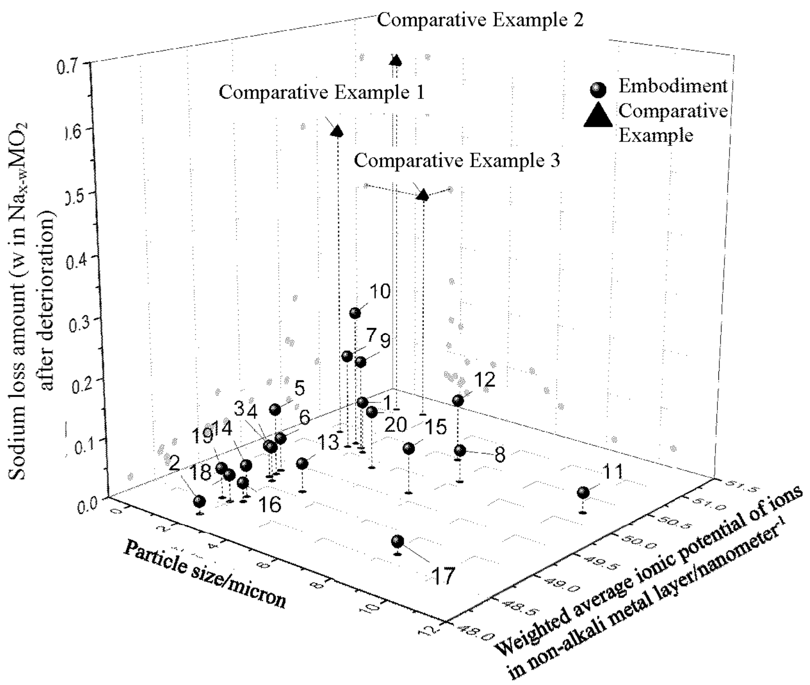
Comparative Example 2
Comparative Example 1
Comparative Example 3
Embodiment
Comparative Example
Sodium loss amount (w in $Na_{x-w}MO_2$ after deterioration)
Particle size/micron
Weighted average ionic potential of ions in non-alkali metal layer/nanometer$^{-1}$
0.0
0.1
0.2
0.3
0.4
0.5
0.6
0.7
1
2
3
4
5
6
7
8
9
10
11
12
13
14
15
16
17
18
19
20

FIG. 9

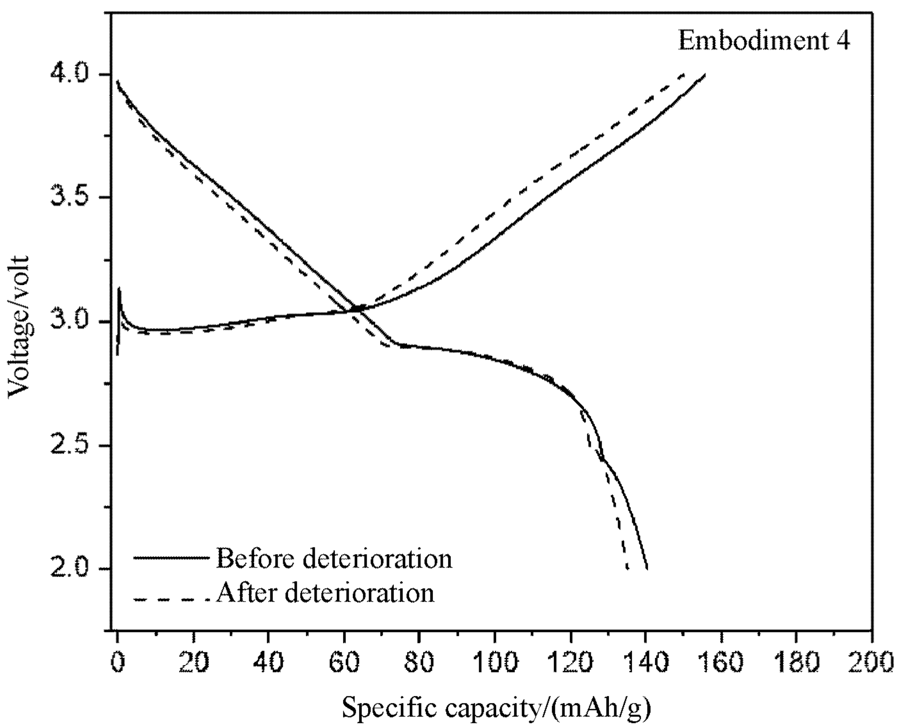
Embodiment 4
Voltage/volt
Specific capacity/(mAh/g)
Before deterioration
After deterioration
2.0
2.5
3.0
3.5
4.0
0
20
40
60
80
100
120
140
160
180
200

FIG. 10

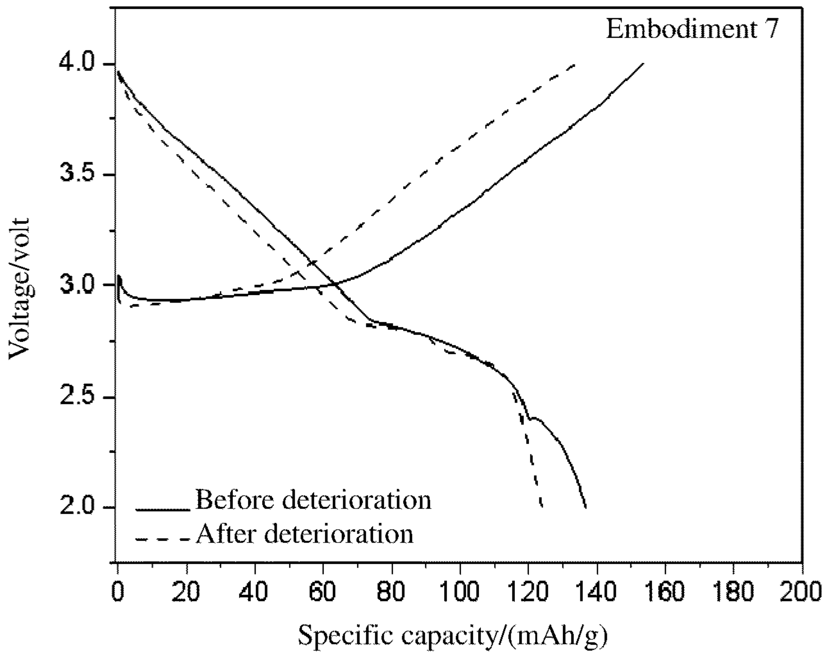
Embodiment 7
Voltage/volt
4.0
3.5
3.0
2.5
2.0
Before deterioration
After deterioration
0
20
40
60
80
100
120
140
160
180
200
Specific capacity/(mAh/g)

FIG. 11

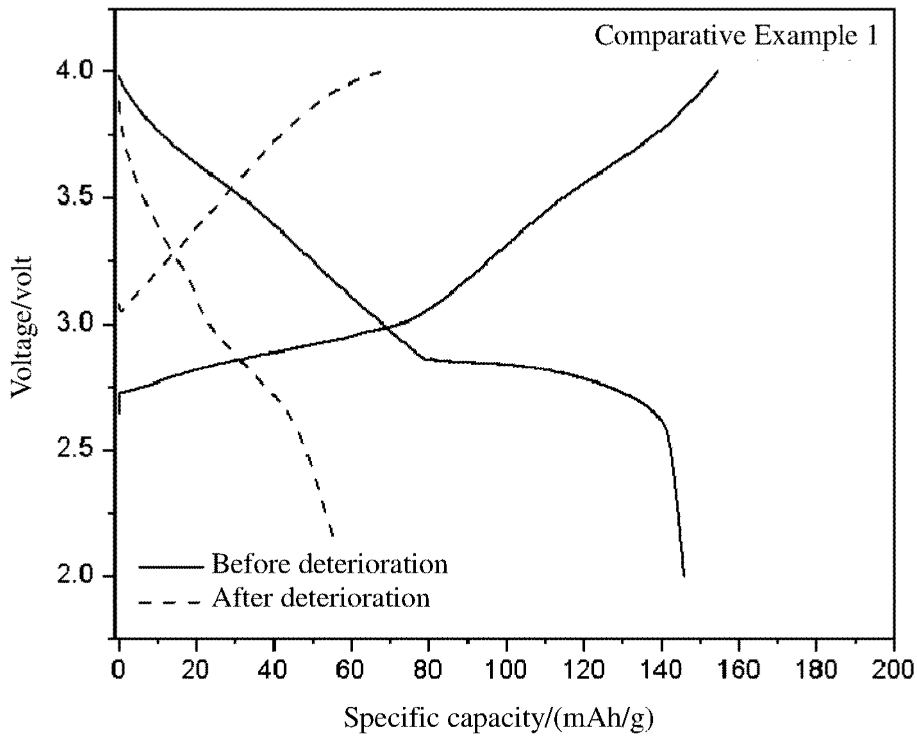
Comparative Example 1
Voltage/volt
4.0
3.5
3.0
2.5
2.0
Before deterioration
After deterioration
0
20
40
60
80
100
120
140
160
180
200
Specific capacity/(mAh/g)

FIG. 12

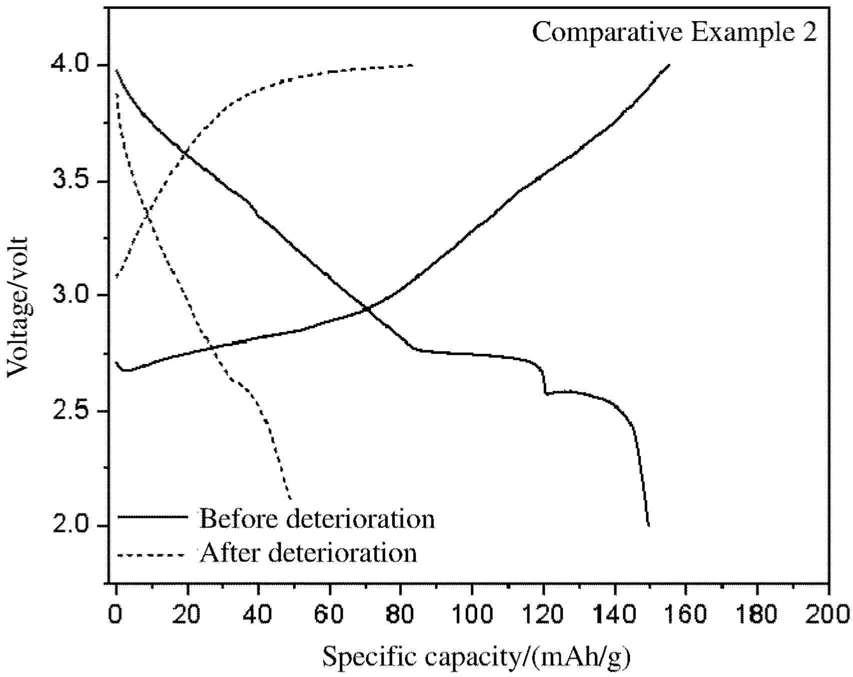
Comparative Example 2
Voltage/volt
4.0
3.5
3.0
2.5
2.0
Before deterioration
After deterioration
0
20
40
60
80
100
120
140
160
180
200
Specific capacity/(mAh/g)

FIG. 13

**INTERNATIONAL SEARCH REPORT**

International application No.
**PCT/CN2023/103684**

**A. CLASSIFICATION OF SUBJECT MATTER**

H01M4/505(2010.01)i; H01M4/525(2010.01)i; H01M4/485(2010.01)i; H01M10/05(2010.01)i; H01M4/131(2010.01)i

According to International Patent Classification (IPC) or to both national classification and IPC

**B. FIELDS SEARCHED**

Minimum documentation searched (classification system followed by classification symbols)

IPC: H01M4/-; H01M10/-

Documentation searched other than minimum documentation to the extent that such documents are included in the fields searched

Electronic data base consulted during the international search (name of data base and, where practicable, search terms used)

CNABS; DWPI; CNKI; WEB OF SCIENCE: 钠, Na, 离子, 电池, 层状, 氧化物, 离子势, 颗粒, 尺寸, 粒径, 微米, μm, Cu, Ni, Zn, Mg, La, Lu, Sb, Mn, Ti, Sn, Fe, Zr, Bi, sodium, ion, battery, layer+, oxide, ion potential, particle, size, micrometer

**C. DOCUMENTS CONSIDERED TO BE RELEVANT**

| Category* | Citation of document, with indication, where appropriate, of the relevant passages | Relevant to claim No. |
|---|---|---|
| X | CN 106673075 A (INSTITUTE OF CHEMISTRY, CHINESE ACADEMY OF SCIENCES) 17 May 2017 (2017-05-17) embodiments 2, 3, and 6, and table 1 | 1-10 |
| Y | CN 112913052 A (HYDRO-QUEBEC) 04 June 2021 (2021-06-04) embodiment 1, and description, paragraphs 0055, 0056, and 0059 | 1-10 |
| Y | CN 112670497 A (NINGDE CONTEMPORARY AMPEREX TECHNOLOGY CO., LTD.) 16 April 2021 (2021-04-16) description, paragraphs 0057 and 0076 | 1-10 |
| A | CN 114050246 A (ZHENGZHOU UNIVERSITY) 15 February 2022 (2022-02-15) entire description | 1-10 |
| A | CN 115986097 A (JIANGSU ZENERGY BATTERY TECHNOLOGIES CO., LTD.) 18 April 2023 (2023-04-18) entire description | 1-10 |
| A | US 2016218363 A1 (THE REGENTS OF THE UNIVERSITY OF CALIFORNIA) 28 July 2016 (2016-07-28) entire description | 1-10 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **02 November 2023** | **08 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/103684**

| Patent document cited in search report | Publication date (day/month/year) | Patent family member(s) | Publication date (day/month/year) |
|---|---|---|---|
| CN 106673075 A | 17 May 2017 | None | |
| CN 112913052 A | 04 June 2021 | US 2022052330 A1 | 17 February 2022 |
| | | CA 3112163 A1 | 09 April 2020 |
| | | WO 2020069618 A1 | 09 April 2020 |
| | | JP 2022503995 A | 12 January 2022 |
| | | KR 20210062701 A | 31 May 2021 |
| | | EP 3861579 A1 | 11 August 2021 |
| | | EP 3861579 A4 | 06 July 2022 |
| CN 112670497 A | 16 April 2021 | None | |
| CN 114050246 A | 15 February 2022 | None | |
| CN 115986097 A | 18 April 2023 | None | |
| US 2016218363 A1 | 28 July 2016 | WO 2015035138 A1 | 12 March 2015 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310192349